# EUROPÄISCHE PATENTSCHRIFT

(11) **EP 3 079 881 B1**
(45) Veröffentlichungstag und Bekanntmachung des Hinweises auf die Patenterteilung: **12.09.2018**
(21) Anmeldenummer: 14816140.9
(22) Anmeldetag: 20.11.2014
(51) Int. Cl.: B29C 51/30, B29C 51/06

(54) **THERMOFORMANLAGE UND BETRIEBSVERFAHREN DAFÜR**
THERMOFORMING INSTALLATION AND OPERATING METHOD THEREFOR
INSTALLATION DE THERMOFORMAGE ET PROCÉDÉ POUR LA FAIRE FONCTIONNER

(30) Priorität: 11.12.2013 DE 102013225646
(43) Veröffentlichungstag der Anmeldung: 19.10.2016
(73) Patentinhaber: Kiefel GmbH, 83395 Freilassing (DE)
(72) Erfinder: TAVARES MEZAROS, Alexandre, 89537 Giengen (DE); WEBER, Thomas, 198515 St. Petersburg (RU)
(74) Vertreter: Farago-Schauer, Peter Andreas
(86) Internationale Anmeldenummer: PCT/EP2014/075106
(87) Internationale Veröffentlichungsnummer: WO 2015/086281

(56) Entgegenhaltungen:
- EP-A1- 1 561 565
- DE-A1- 3 109 338
- US-A- 3 853 449
- US-A- 4 496 408
- US-A- 5 167 969

## Beschreibung

Die vorliegende Erfindung betrifft eine Thermoformanlage, insbesondere für die Fertigung von Innenbehältern für Kältegeräte, und ein Betriebsverfahren dafür.

Derartige Thermoformanlagen umfassen herkömmlicherweise ein Formwerkzeug mit einer Patrize, das heißt einem Vorsprung, auf den ein zuvor erwärmtes Werkstück aufgezogen wird, um sich der Form der Patrize anzupassen, und eine Streckglocke, die beim Formen des Werkstücks mit dem Werkzeug zusammenwirkt. Indem das Werkstückvor einer offenen Seite der Streckglocke luftdicht platziert und die Streckglocke evakuiert15 wird, wird das Werkstück zunächst großflächig gleichmäßig in die Streckglocke hineingewölbt. In den auf diese Weise erhaltenen Hohlraum des Werkstücks wird die Patrize eingeführt, und durch Evakuieren des Zwischenraums zwischen Werkstück und Patrize wird das Werkstück eng an die Patrize angeformt.

Kombinations-Kältegeräte haben meist einen aus zwei Teilen zusammengesetzten Innenbehälter, wobei jedes der beiden Teile ein Lagerfach des Kältegeräts begrenzt. Aus EP 1 561 565 A1 ist eine Thermoformanlage bekannt, die es ermöglicht, mittels einer zweigeteilten Streckglocke beide Teile des Innenbehälters in einem Arbeitsgang aus einem einzigen Flachmaterial-Werkstück zu fertigen.

Während Breite und Tiefe der Lagerfächer eines Kombinations-Kältegeräts sich im Allgemeinen nur wenig unterscheiden, ist die Höhe der Lagerfächer meist deutlich unterschiedlich. Dies hat zur Folge, dass die Oberflächenvergrößerung beim Tiefziehen bei einem niedrigen Fach prozentual größer ist als bei einem hohen, so dass, wenn beide Innenbehälter, wie in EP 1 561 565 A1 vorgesehen, aus einem gleichen Flachmaterial-Werkstück gefertigt werden, die resultierende Wandstärke in den beiden Lagerfächern unterschiedlich ist. Die am niedrigeren Fach benötigte Wandstärke bestimmt daher die Dicke, die das ursprüngliche Flachmaterial-Werkstück haben muss, mit der Folge, dass in dem Teil des Flachmaterial-Werkstücks, aus dem der höhere Innenbehälter gefertigt wird, die Wandstärke größer ist als nötig. Dies führt nicht nur zu unnötigen Materialkosten, eine hohe Wandstärke des Flachmaterial-Werkstück hat ferner zur Folge, dass sich die zum Erwärmen des Werkstücks auf eine zum Tiefziehen geeignete Temperatur benötigte Zeitspanne verlängert, was den gesamten Fertigungsprozess verzögert und die Effizienz der für die Produktion eingesetzten Maschinen vermindert, oder dass eine höhere Heizleistung eingesetzt werden muss, um das Werkstück schneller auf Verformungstemperatur zu bringen, was jedoch zu erhöhten Wärmeverlusten und damit zu einer verminderten Energieeffizienz der Fertigung führt.

Darüber hinaus ist aus der US 4 496 408 A eine Vorrichtung zum Herstellen zweiachsig orientierter thermoplastischer Hohlkörper aus einer einzigen Platte in einem kontinuierlichen Verfahren bekannt, wobei die Vorrichtung ein oberes Werkzeugteil und ein unteres Werkzeugteil aufweist, zwischen welchen die einzige durch einen Heizofen vorerwärmte Platte eingebracht wird, um diese zu verformen. Hierzu weist die untere Platte zwei Formenteile (Patrizen) auf und die obere Platte zwei komplementär zu diesen zwei Formenteilen ausgestaltete Höhlungen (Matrizen). Sind das obere Werkzeugteil und das untere Werkzeugteil aufeinander liegend zueinander verlagert, sind ein erster Formbereich (erstes Formenteil und erste komplementäre Höhlung) und ein zweiter Formbereich (zweites Formenteil und zweite komplementär ausgestaltete Höhlung) mittels einer einzigen Dichtfläche dichtend voneinander getrennt.

Ferner ist in der EP 1 561 565 A1 eine Vorstreckvorrichtung für eine Thermoformstation offenbart, welche auf einem Unterwerkzeug zwei nebeneinander angeordnete Thermoformen sowie eine darüber dichtend platzierbare Saugglocke umfasst. Die Saugglocke besitzt hierbei eine Trennwand, mittels welcher die beiden nebeneinander angeordneten Thermoformen räumlich voneinander getrennt werden können, wobei die Trennwand bei auf das Unterwerkzeug aufgesetzter Saugglocke zwischen den beiden Thermoformen angeordnet ist.

Des Weiteren ist in der DE 31 09 338 A1 ein Verfahren zum Kaschieren eines luftdurchlässigen Formteils, insbesondere eines Verkleidungsteils für die Innenausstattung eines Kraftfahrzeugs, beschrieben, dessen kaschierte Oberfläche wenigstens eine örtlich vorbestimmte Trennlinie zwischen vorzugsweise optisch unterschiedlichen Bereichen aufweist. Das Verfahren zeichnet sich insbesondere dadurch aus, dass eine bereits die unterschiedlichen Bereiche mit der Trennlinie aufweisende Folie verwendet wird, die zusätzlich zur Halterung in dem Rahmen längs der Trennlinie an einer der Kontur des Formteils in dem Bereich für die Trennlinie angepassten Schiene gehalten, nach der Positionierung oberhalb des Formteils im Trennlinienbereich mittels der Schiene unverrückbar gegen das Formteil gepresst und dort gehalten und schließlich durch Anlegen eines Vakuums in den der Trennlinie benachbarten Bereichen mit dem Formteil verklebt wird.

Aus der US 3 853 449 A ist eine Vorrichtung zum Tiefziehen von mehreren Plastikbehältern aus einer einzigen Materialplatte bekannt, wobei vier Formwerkzeuge auf einen vertikal verfahrbaren Rahmen platziert sind, und die einzige Materialplatte in einem darüber liegenden Rahmen eingespannt ist. Auf dem unteren Rahmen wird nun von oben eine Formhilfe aufgesetzt, wobei dann die vier Formwerkzeuge vertikal hochwärts verlagert werden und in die Formhilfe eintauchen, so dass die vier Formwerkzeuge durch Trennwände der Formhilfe räumlich voneinander getrennt sind. Nach dem Tiefziehen ist aus der einzigen Materialplatte beispielsweise ein Kühlschrankinnenteil mit vier Fächern hergestellt.

Weiter zeigt die US 5 167 969 A einen geteilten Hilfsrahmen für eine rotierende Vakuum-Thermoformmaschine, in welcher eine Vielzahl an identischen Hauptrahmen in einem Karussell zum Tragen von thermoplastischen Werkstücken von einer Ladestation zu einer Heizstation arrangiert ist.

Aufgabe der Erfindung ist, eine Thermoformanlage und ein Betriebsverfahren dafür zu schaffen, die eine material- und energieeffiziente Fertigung von Kältegeräte-Innenbehältern, insbesondere für Kombinations-Kältegeräte, ermöglichen.

Die Aufgabe wird gelöst, indem einer Thermoformanlage nach Anspruch 1 und/oder ein Verfahren nach Anspruch 10 eingesetzt wird.

Die zwei Dichtflächen ermöglichen es, anstelle eines einzigen, beide Öffnungen der Saugglocke überdeckenden Werkstücks zwei Werkstücke an der Saugglocke zu platzieren und zu verformen. Diese zwei Werkstücke weisen unterschiedliche Wandstärken auf-, so dass die Wandstärke jedes einzelnen Werkstücks passend zu der beim Thermoformen des Werkstücks zu realisierenden Oberflächenvergrößerung und der benötigen Wandstärke des fertigen Innenbehälterteils festgelegt werden kann.

Zweckmäßigerweise sollte der Querträger als eine Trennwand ausgebildet sein, der die Streckglocke in zwei getrennt voneinander evakuierbare Kammern unterteilt. Auf diese Weise kann sichergestellt werden, dass trotz unterschiedlicher Verformbarkeiten der beiden Werkstücke das schlechter verformbare ausreichend gedehnt wird, ohne dass das leichter verformbare gleichzeitig stärker gedehnt wird als zur Fertigung des Innenbehälters erforderlich.

Ein Rahmen, der zum Klemmen der zu formenden Werkstücke mit der Streckglocke zusammenwirkt, weist einen dem Querträger gegenüberliegenden Querbalken auf, wobei die Breite eines Spalts zwischen der ersten Dichtfläche und einer ihr gegenüberliegenden Oberfläche des Querbalkens größer ist als die Breite eines Spalts zwischen der zweiten Dichtfläche und einer ihr gegenüberliegenden Oberfläche des Querbalkens, um Werkstücke mit unterschiedlichen Wandstärken gleichzeitig am Rahmen klemmen zu können.

Eine solche unterschiedliche Spaltbreite kann realisiert werden, indem die zwei Dichtflächen der Streckglocke in gegeneinander versetzten Ebenen liegen, oder indem an dem Querbalken eine Stufe zwischen der der ersten Dichtfläche gegenüberliegenden Oberfläche und der der zweiten Dichtfläche gegenüberliegenden Oberfläche eine Stufe verläuft. Um nach dem Einführen der Patrizen in die durch Evakuieren der Saugglocke geformten Vertiefungen der Werkstücke die Werkstücke exakt an die Patrizen anformen zu können, sollten beide Patrizen Saugöffnungen aufweisen, die es ermöglichen, einen Zwischenraum zwischen Werkstück und Patrize zu evakuieren und so das Werkstück an die Patrize anzuformen. Die Patrizen sollten getrennt voneinander absaugbar sein, um sicherzustellen, dass nicht in einem ersten Schritt nur das leichter verformbare, dünnere Werkstück an seine Patrize angesaugt wird und anschließend das schwerer verformbare, dickere. Vielmehr sollte vorzugsweise an einer der Patrizen eine höhere Saugleistung verfügbar sein als an der anderen, um dasjenige Werkstück, das nach dem Thermoformen die höhere Wandstärke aufweist, schneller an seiner Patrize zur Anlage zu bringen als das Werkstück mit der geringeren Wandstärke. So kann das starkwandige Werkstück bereits im Kontakt mit der Patrize abkühlen und erhärten, während an dem dünnwandigen noch die Evakuierung im Gange ist. Da die Abkühlung des dünnwandigen Werkstücks schneller von statten geht, können auf diese Weise beide Werkstücke im Wesentlichen gleichzeitig eine Temperatur erreichen, bei der ein Entformen der fertigen Innenbehälterteile möglich ist, und die Zykluszeit des Formvorgangs kann minimiert werden.

Das Werkstück bzw. das Innenbehälterteil, das nach dem Thermoformen die größere Wandstärke aufweist, kann aus dem ursprünglich stärkeren Flachmaterial-Werkstück gefertigt sein, muss es aber nicht. Zwar wird man normalerweise für das höhere Innenbehälterteil ein dünneres Flachmaterial-Werkstück verwenden; um eine ausreichende Stabilität des höheren Innenbehälterteils zu gewährleisten, kann es aber sinnvoll sein, die Wandstärken der beiden Flachmaterial-Werkstücke so auf ihre Dehnung abzustimmen, dass nach dem Thermoformen die Wandstärke des höheren Innenbehälterteils größer ist als die des niedrigen Innenbehälterteils.

Die Thermoformanlage kann eine Aufwärmstation aufweisen, die die Flachmaterial-Werkstücke durchlaufen, um auf eine zum Verformen geeignete Temperatur erhitzt zu werden. Eine solche Aufwärmstation umfasst vorzugsweise eine erste Heizung zum Erhitzen eines in der ersten Öffnung der Streckglocke zu platzierenden FlachmaterialWerkstücks und eine zweite Heizung zum Erhitzen eines in der zweiten Öffnung der Streckglocke zu platzierenden Flachmaterial-Werkstücks. Die Leistungsdichte der ersten Heizung sollte größer sein als die der zweiten Heizung, um beide Werkstücke im Wesentlichen gleichzeitig auf eine zum Verformen geeignete Temperatur bringen zu können, auch wenn die Wandstärke des ersten Werkstücks größer ist als die des zweiten.
Die Thermoformanlage kann eingerichtet sein, um als Stapel zugeführte Flachmaterial-Werkstücke zu verarbeiten. Wenn gleichzeitig Werkstücke mit unterschiedlichen Wandstärken verarbeitet werden, ergeben sich unterschiedliche Höhen der Stapel, von denen die Werkstücke abgenommen werden müssen. Daher sollten bei einer Flachmaterial-Entstapeleinrichtung, die eine Mehrzahl von Flachmaterialhaltern wie etwa evakuierbaren Saugnäpfen umfasst, die Flachmaterialhalter auf Gruppen verteilt sein, wobei eine erste Gruppe der Flachmaterialhalter, die sich auf einer Seite einer Grenzlinie befinden, relativ zu einer zweiten Gruppe der Flachmaterialhalter auf der anderen Seite der Grenzlinie vertikal beweglich sein, um unterschiedliche Höhen der Stapel auszugleichen.

Die Flachmaterial-Entstapeleinrichtung kann ferner einen Trennkörper umfassen, der entlang der besagten Grenzlinie zwischen zwei an der ersten bzw. der zweiten Gruppe von Flachmaterialhaltern gehaltene Flachmaterial-Werkstücke eingreift.

Ein solcher Trennkörper kann als Anschlag für die Positionierung der nach dem Entstapeln der Streckglocke zuzuführenden Flachmaterial-Werkstücke dienen. Zum Positionieren dieser Werkstücke kann die Entstapeleinrichtung ferner Schieber umfassen, die quer zu der Grenzlinie beweglich sind, um ein Flachmaterial-Werkstück gegen den Trennkörper zu drücken.

Weitere Schieber können parallel zu der Grenzlinie beweglich sein, um die Werkstücke in Richtung der Grenzlinie auszurichten.

Der Trennkörper kann zwischen einer zwischen die Werkstücke eingreifenden aktiven Stellung und einer nicht eingreifenden passiven Stellung beweglich sein, um eine Kollision des Trennkörpers mit einem Hindernis zu vermeiden, wenn die Flachmaterialhalter auf die Stapel abgesenkt werden, um von diesen ein Werkstück aufzunehmen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Thermoformanlage in einer schematischen Übersicht;
- Fig. 2: eine Entstapeleinrichtung der Thermoformanlage, gesehen parallel zur Transportrichtung der Werkstücke durch die Thermoformanlage, vor Beginn eines Entstapelvorgangs;
- Fig. 3: die Entstapeleinrichtung in Kontakt mit noch auf den Stapeln liegenden Werkstücken;
- Fig. 4: die Entstapeleinrichtung während des Ausrichtens von aufgenommenen Werkstücken;
- Fig. 5: die Entstapeleinrichtung mit ausgerichteten Werkstücken;
- Fig. 6: die Entstapeleinrichtung in einer Ansicht quer zur Transportrichtung mit in Höhe eines Transportrahmens positionierten Werkstücken;
- Fig. 7: einen schematischen Querschnitt durch eine Aufwärmstation der Thermoformanlage;
- Fig. 8: eine Ansicht einer Streckglocke der Thermoformanlage, gesehen in Transportrichtung;
- Fig. 9: einen Schnitt durch die Streckglocke entlang der Ebene IX-IX aus Fig. 8;
- Fig. 10: ein Detail der Streckglocke in perspektivischer Ansicht;
- Fig. 11: eine teilweise geschnittene Ansicht einer Ziehstation der Thermoformanlage in einem ersten Stadium nach Einbringen der Werkstücke;
- Fig. 12: eine zu Fig. 11 analoge Ansicht in einem zweiten Stadium; und
- Fig. 13: eine zu Fig. 11 analoge Ansicht in einem dritten Stadium des Formens der Werkstücke

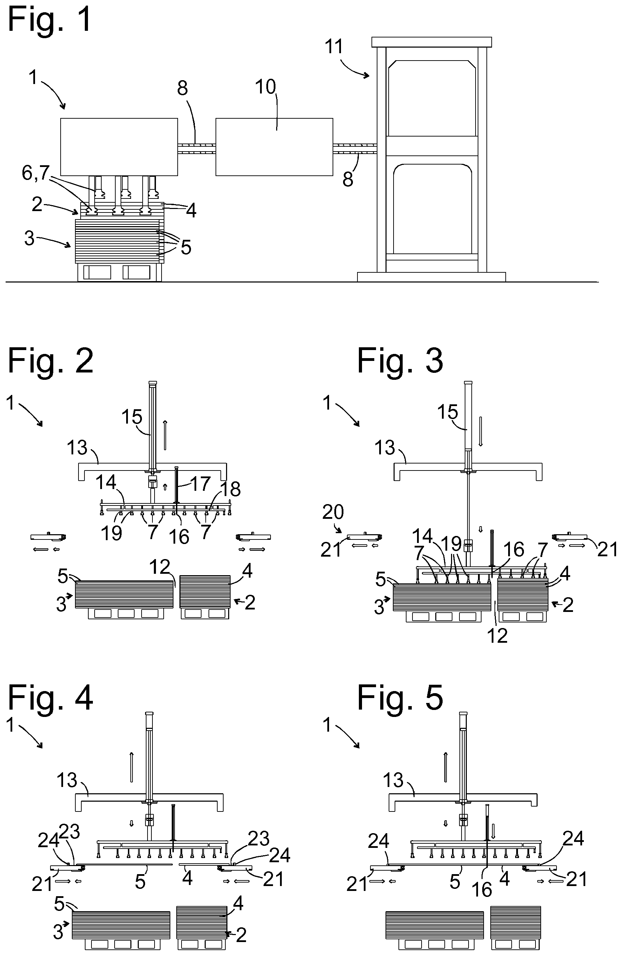

Fig. 1 zeigt eine erfindungsgemäße Thermoformanlage in einer Seitenansicht, senkrecht zur Transportrichtung, hier von links nach rechts, von Werkstücken durch die Thermoformanlage. Sie umfasst eine Entstapeleinrichtung 1, unter der zwei Stapel 2, 3 von zu formenden Werkstücken 4 bzw. 5 platziert sind. Die Werkstücke 4, 5 sind flache rechteckige Platten aus einem thermoplastischen Kunststoff. Die Stapel 2, 3 sind unterschiedlich hoch, da zwar die Zahl der Werkstücke 4 bzw. 5 in jedem Stapel gleich sein kann, die Stärke der Werkstücke 4, 5 sich jedoch von einem Stapel 2 zum anderen 3 unterscheidet.

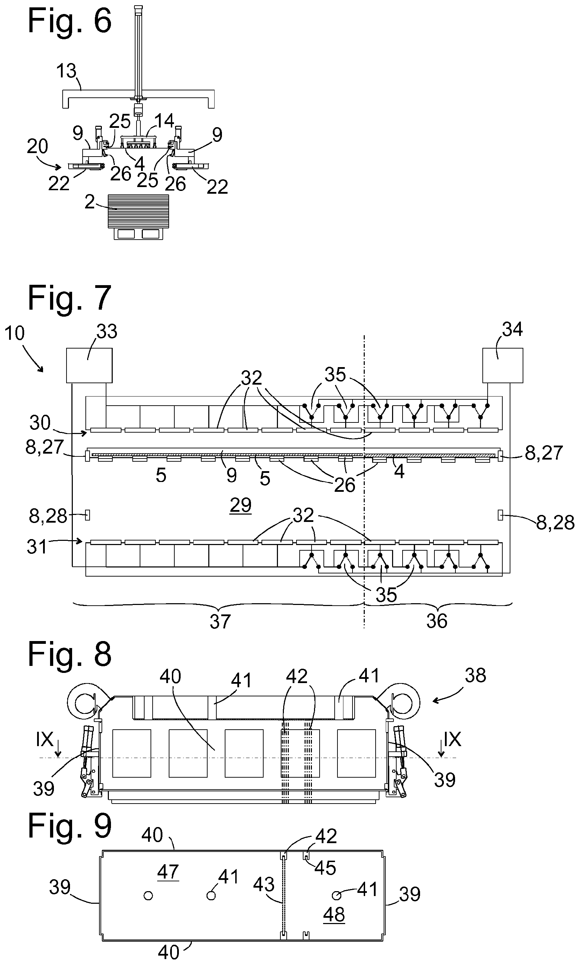

Wie im Folgenden noch genauer erläutert wird, umfasst die Entstapeleinrichtung 1 mehrere Flachmaterialhalter 6, hier in Form von evakuierbaren Saugglocken 7, die vertikal beweglich sind, um auf den jeweils obersten Werkstücken 4, 5 der Stapel 2, 3 platziert zu werden, diese anzusaugen und auf ein Niveau anzuheben, wo sie von Klemmbalken 9 (siehe Fig. 6) einer zwischen der Entstapeleinrichtung 1, einer Aufwärmstation 10 und einer Ziehstation 11 umlaufenden endlosen Transportkette 8 gegriffen werden, m zunächst in die Aufwärmstation 10 und anschließend in die 10 Ziehstation 11 verbracht zu werden.

Fig. 2 zeigt die Entstapeleinrichtung 1 in einer schematischen Darstellung, gesehen in Transportrichtung. Die beiden Stapel 2, 3 sind nebeneinander platziert und durch einen Spalt 12 voneinander beabstandet.

Die Entstapeleinrichtung 1 hat ein ortsfestes Gehäuse 13, an dem ein Gestell 14, das mit einer Mehrzahl von Saugglocken 7 bestückt ist, mit Hilfe eines Vertikalstellgliedes, hier eines hydraulischen oder pneumatischen Zylinders 15, vertikal beweglich ist. Ein Trennkörper 16 in Form einer in Blickrichtung der Fig. 2 langgestreckten Leiste ist durch einen zweiten Zylinder 17 vertikal beweglich am Gestell 14 aufgehängt. Die Saugglocken 7 sind mit einer Sammelleitung 18 des Gestells 14 über vertikale Leitungen 19 verbunden, wobei wenigstens einige dieser Leitungen, im vorliegenden Fall diejenigen links vom Trennkörper 16, teleskopisch verlängerbar sind. Der Trennkörper 16 markiert eine Grenzlinie zwischen zwei Gruppen von Saugglocken 7, einer Gruppe links vom Trennkörper, über dem Stapel 3, und einer Gruppe rechts vom Trennkörper 16, über dem Stapel 2.

Einer weiterentwickelten Ausgestaltung zufolge sind der Trennkörper 16 und der Zylinder 17 am Gestell 14 in verschiedenen, in Querrichtung des Trennkörpers 30 beabstandeten Positionen montierbar, so dass wenigstens einige der Saugglocken 7 je nach ausgewählter Position des Trennkörpers 16 rechts oder links von diesem zu liegen kommen können. In diesem Fall sind vorzugsweise alle Leitungen 19 teleskopisch verlängerbar, zumindest aber diejenigen, die, je nach ausgewählter Position des Trennkörpers 16, links von diesem zu liegen kommen können.

Fig. 3 zeigt die Entstapeleinrichtung 1 mit durch den Zylinder 15 zu den Stapeln 2, 3 abgesenktem Gestell 14. Der Trennkörper 16 ist in etwa über dem Spalt 12 platziert, greift aber nicht in diesen ein. Die Saugglocken 7 rechts vom Trennkörper 16 berühren das oberste Werkstück 4 des Stapels 2; links von Trennkörper 16 sind die Leitungen 19 verlängert, um die von Ihnen getragenen Saugglocken 7 am obersten Werkstück 5 des niedrigeren Stapels 3 zur Anlage zu bringen. Durch Absaugen an der Sammelleitung 18 wird ein Unterdruck an den Saugglocken 7 erzeugt, der es ermöglicht, die jeweils obersten Werkstücke 4, 5 von den Stapeln 2, 3 ab- und auf die Höhe einer Ausrichteinrichtung 20 anzuheben.

Die Ausrichteinrichtung 20 umfasst zwei quer zur Transportrichtung horizontal bewegliche Schieber 21 sowie außerhalb der Schnittebene der Figuren 2 bis 5 liegende, nur in Fig. 6 gezeigte, in der Transportrichtung bewegliche Schieber 22. Die Schieber 21, 22 befinden sich in den in Fig. 2 bis 4 gezeigten Stadien jeweils in einer zurückgezogenen Ruhestellung, in welcher der Abstand zwischen ihnen groß genug ist, um die am Gestell 14 gehaltenen Werkstücke 4, 5 durchzulassen. Wenn die Werkstücke 4, 5 über die Schieber 21, 22 angehoben sind, werden letztere aufeinander zubewegt, so dass, wenn die Werkstücke 4, 5 wieder abgesenkt werden, sie an drei ihrer vier Kanten wie in Fig. 4 gezeigt auf horizontalen Auflageflächen 23 der Schieber 21, 22 zu liegen kommen und dadurch stabil unterstützt werden. Die Schieber 21, 22 weisen nach oben aufragende Vorsprünge 24 auf, die die Auflageflächen 23 begrenzen. Nicht unterstützte vierte Kanten der Werkstücke 4,5 liegen einander gegenüber.

Als nächstes wird der Trennkörper 16 wie in Fig. 5 gezeigt zwischen die Werkstücke 4, 5 abgesenkt, und die Schieber 21, 22 werden weiter aufeinander zu bewegt. Sobald einer der Vorsprünge 24 an die Kante eines Werkstücks 4 oder 5 anstößt, schiebt er das Werkstück vor sich her, bis dessen weitere Bewegung durch Anstoßen an den Trennkörper oder, im Falle der Schieber 22, durch Anstoßen an den Vorsprung 24 eines gegenüberliegenden Schiebers 22, blockiert ist.. Auf diese Weise werden trotz eventueller Ungenauigkeiten bei der Platzierung der Stapel 2, 3 die abgehobenen Werkstücke 4,5 in der Entstapeleinrichtung 1 exakt und reproduzierbar positioniert.

Die Klemmbalken 9 sind, wie mit Bezug auf Fig. 1 erwähnt, an einer Transportkette 8 montiert, die sich endlos durch die Entstapeleinrichtung 1, die Aufwärmstation 10 und die Zielstation 11 erstreckt. Wie in Fig. 6 gezeigt, haben die Klemmbalken 9 jeweils einen oberen Klemmbacken 25 und einen unteren Klemmbacken 26, der von unten gegen den oberen Klemmbacken 25 klappbar ist, um in Transportrichtung vordere und hintere Kanten der Werkstücke 4, 5 zwischen einander einzuklemmen. Vorzugsweise sind mehrere Klemmbacken 26 über die Länge der Klemmbalken 9 verteilt (s. Fig. 7) und unabhängig voneinander klappbar, um beide Werkstücke 4, 5 trotz ihrer unterschiedlichen Stärke fest und sicher zu klemmen.

Nach dem Einklemmen der Werkstücke 4, 5 wird die Transportkette 8 in Bewegung versetzt, um die Werkstücke 4, 5 zunächst in die Aufwärmstation 10 zu verlagern.

Fig. 7 zeigt die Aufwärmstation 10 in einem schematischen Schnitt quer zur Transportrichtung. Der Schnitt verläuft durch die zwei Werkstücke 4, 5.Man erkennt einen der beiden die Werkstücke 4, 5 fixierenden Klemmbalken 9, in einem Innenraum 29 der Aufwärmstation 10 an seinen beiden Enden gehalten von einem oberen Trum 27 der Transportkette 8. Untere Trümer 28 verlaufen ebenfalls durch den Innenraum 29, so dass die Werkstücke 4, 5 näher an der Decke 30 als am Boden 31 des Innenraums 29 positioniert sind und nicht Gefahr laufen, beim Erwärmen in der Aufwärmstation 10 so weich zu werden, dass sie bis zum Boden 31 durchhängen und in Kontakt mit diesem Schaden nehmen.

Decke 30 und Boden 31 des Innenraums 29 sind jeweils ausgekleidet mit mehreren untereinander baugleichen plattenförmigen Heizelementen 32, die mit unterschiedlichen Leistungen, hier zum Beispiel mit unterschiedlichen Betriebsspannungen von zwei Spannungsquellen 33, 34, beaufschlagbar sind. Die Heizelemente 32 können jeweils fest mit einer der Spannungsquellen 33, 34 verbunden sein, oder es können, wie in Fig. 7 gezeigt, einigen der Heizelemente 32 Schalter 35 zugeordnet sein, über die sie wahlweise mit der Spannungsquelle 33 oder der Spannungsquelle 34 verbindbar sind. Die Schalter 35 sind, wie in Fig. 7 gezeigt, so geschaltet, dass sämtliche Heizelemente 32 oberhalb oder unterhalb des Werkstücks 4 mit der Spannungsquelle 34 zu einer ersten Heizung 36 und die Heizelemente 32 oberhalb oder unterhalb des Werkstücks 5 mit der Spannungsquelle 33 zu einer zweiten Heizung 37 mit jeweils innerhalb einer Heizung homogener, aber zwischen den Heizungen 36, 37 unterschiedlicher Heizleistung pro 35 Flächeneinheit zusammengeschaltet sind.

Die Leistung der Heizung 36 auf Seiten des dickeren Werkstücks 4 ist bemessen, um während einer vorgegebenen Verweildauer des Werkstücks 4 in der Aufwärmstation dieses auf eine zum Verformen geeignete Temperatur zu bringen. Dazu muss zwischen Heizung 36 und Werkstück 4 ein Temperaturgradient vorhanden sein, der um so größer ist, je kürzer die Verweildauer ist. Da das Werkstück 5 dünner ist als das Werkstück 4, erwärmt es sich schneller als dieses, bzw. es genügt ein geringerer Temperaturgradient zwischen den Heizelementen 32 der Heizung 37 und dem Werkstück 5, um dieses in der vorgegebenen Verweildauer auf die Erweichungstemperatur zu bringen. Je niedriger die Betriebstemperatur der Heizelemente 32 ist, um so niedriger ist auch die zu ihrer Aufrechterhaltung erforderliche Heizleistung. Indem somit die Heizelemente 32 der Heizungen 36, 37 mit unterschiedlicher, an die Dicke der zu erwärmenden Werkstücke 4, 5 angepasster Leistung betrieben werden, kann in beträchtlichem Maße Betriebsenergie eingespart werden.

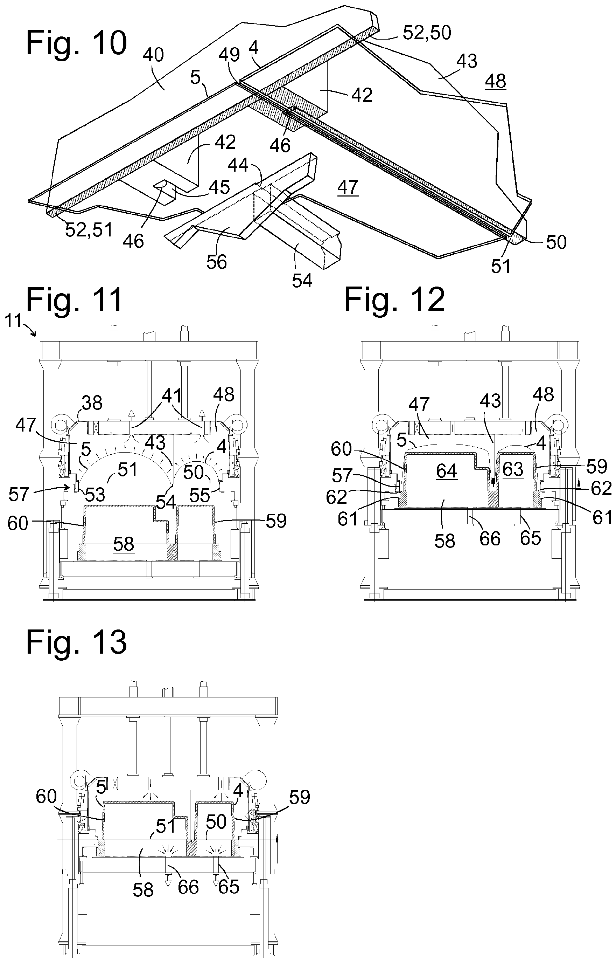

Fig. 8 zeigt eine Streckglocke 38 der Zielstation 11, gesehen in Transportrichtung. Sie hat im Wesentlichen die Form eines Quaders mit offener Unterseite, zwei einander gegenüberliegenden Stirnwänden 39 und zwei Längswänden 40, von denen eine in Fig. 8 dem Betrachter zugewandt ist. An der Decke der Streckglocke 38 sind zwei Sauganschlüsse 41 zu sehen, die zum Evakuieren der Streckglocke 38 mit nicht zwei nicht gezeigten Saugpumpen verbunden sind. Halteprofile 42 zum Befestigen einer Trennwand 43 (siehe zum Beispiel Fig. 10) sind an den Innenseiten der Längswände 40 der Streckglocke 38 angebracht und, da in der Ansicht der Fig. 8 eigentlich hinter der dem Betrachter zugewandten Längswand 40 verborgen, gestrichelt dargestellt.

Wie in dem horizontalen Schnitt der Fig. 9 zu erkennen, haben die Halteprofile 42 jeweils einen u-förmigen Querschnitt und begrenzen eine zum Inneren der Streckglocke 38 hin offene Nut 45. Zwei Paare von sich gegenüberliegenden Halteprofilen 42 erlauben eine Anbringung einer Trennwand 43 an zwei verschiedenen Positionen. Am Boden der Nut 45 ist jeweils eine schlauchförmige Dichtung 46 (siehe auch Fig. 10) angebracht, die nach Einführen der Trennwand 43 in die Nut 45 aufblasbar ist, um dicht an den Kanten der Trennwand 43 anzuliegen und so das Innere der Streckglocke 38 in zwei Kammern 47, 48 zu unterteilen, die jeweils unabhängig voneinander über den linken bzw. den rechten 35 Sauganschluss 41 evakuierbar sind.

Fig. 10 zeigt ein Detail der Streckglocke 38 mit an ihr platzierten Werkstücken 4, 5 in perspektivischer Ansicht. Gezeigt ist ein Ausschnitt einer Längswand 40 mit den daran angebrachten Halteprofilen 42, wobei in der Nut 45 eines der beiden Halteprofile 42 die Trennwand 43 aufgenommen ist. Die Werkstücke 4, 5 sind transparent gezeichnet, um die unteren Kanten der Längswand 40 und der Trennwand 43 zeigen zu können, an denen die Werkstücke 4, 5 die Kammern 47, 48 jeweils dicht verschließend anliegen. Zwischen den Werkstücken 4, 5 erstreckt sich ein Spalt 49 über die gesamte Breite der Streckglocke 38 von ihrer in Fig. 10 gezeigten Längswand 40 bis zur gegenüberliegenden, nicht gezeigten. Der Spalt 49 verläuft über die gesamte Unterkante der Trennwand 43 und trennt an dieser Unterkante eine vom Werkstück 4 berührte Dichtfläche 50 von einer vom Werkstück 5 berührten Dichtfläche 51. Die Dichtflächen 50, 51 erstrecken sich auch auf die unteren Stirnflächen der Halteprofile 42 und, über diese 15 hinausgehend, auf die Unterkanten 52 der Längswände 12 und der in Fig. 11 nicht gezeigten Stirnseiten 36. So erstreckt sich die Dichtflächen 50, 51 rings um die offenen Unterseiten der Kammern 47 bzw. 48.

Fig. 11 zeigt die Ziehstation 11 in einer teilweise geschnittenen Ansicht in Transportrichtung. Die Werkstücke 4, 5 sind durch die Transportkette 8 unmittelbar unter der Streckglocke 38 platziert und von einem vertikal beweglichen Rahmen 57, von dem in Fig. 11 drei Querbalken 53, 54, 55 gezeigt sind, in Anlage an den Dichtflächen 50, 51 der Streckglocke 38 gehalten. Der mittlere Querbalken 54 unterstützt die einander beiderseits des Spalts 49 aus Fig. 10 gegenüberliegenden Kanten der Werkstücke 4, 5 und hält sie in Kontakt mit der Unterkante der Trennwand 43. In Fig. 10 ist der Querbalken 54 sowie ein die Querbalken 53, 54, 55 verbindender Längsbalken 56 des Rahmens jeweils fragmentarisch zu sehen. An ihren Oberseiten weisen Querbalken 54 und Längsbalken 56 eine Stufe 44 auf, die sich entlang der einander gegenüberliegenden Kanten der Werkstücke 4, 5 erstreckt und den Dickenunterschied zwischen den Werkstücken 4, 5 ausgleicht, so dass, wenn der Rahmen 57 von unten gegen die Streckglocke 38 gedrückt wird, beide Werkstücke 4, 5 entlang der Dichtflächen 50, 51 fest und sicher geklemmt sind.

Alternativ könnten die Oberseiten von Quer- und Längsbalken 54, 56 auch eben sein und eine den Dicken unterschied der Werkstücke 4, 5 ausgleichende Stufe zwischen den Dichtflächen 50, 51 vorgesehen sein.

Ein in Fig. 11 im unteren Bereich der Zielstation 11 positioniertes, im Schnitt gezeigtes Werkzeug 58 umfasst zwei Patrizen 59, 60, von denen die eine unter dem Werkstück 4 und die andere unter dem Werkstück 5 positioniert ist. Die Patrize 59 gibt die Form eines aus dem Werkstück 4 zu formenden Innenbehälters, hier zum Beispiel eines Gefrierfach-Innenbehälters, vor, während die Patrize 60 die Form eines Normalkühlfachs vorgibt.

Fig. 12 zeigt das Werkzeug 58 in einer angehobenen Stellung, in der die Patrizen 59, 60 in die durch Evakuieren der Kammern 47, 48 geformten Einbuchtungen der Werkstücke 4, 5 einzurücken beginnen. Die Aufwärtsbewegung des Werkzeugs 58 wird so lange fortgesetzt, bis eine Stufe 61 des Werkzeugs 58 an einer Unterseite des Rahmens 57 15 anliegt und eine weitere Stufe 62 mit den Oberkanten der Quer- und Längsbalken 53 bis 56 des Rahmens 57 bündig ist.

Luft, die in diesem Stadium zwischen den Werkstücken 4, 5 und den Patrizen 59, 60 eingeschlossen ist, fließt über kleine, in den Figuren nicht dargestellte Bohrungen in den 20 Wänden der Patrizen 59, 60 zu deren Innenräumen 63, 64 ab, sobald diese über Sauganschlüsse 65, 66 evakuiert werden. Indem sich die Werkstücke 4, 5 unter dem Druck der zwischenzeitlich wieder in die Kammern 47, 48 eingelassene Luft wie in Fig. 13 gezeigt an die Patrizen 59, 60 anschmiegen und im Kontakt mit diesen erkalten, werden mit jedem Arbeitszyklus der Thermoformanlage zwei voneinander getrennte Innenbehälter für die zwei Lagerfächer eines Kombinationskältegeräts erhalten.

Die an den Sauganschlüssen 65, 66 angelegte Saugleistung kann jeweils für jeden Innenbehälter spezifisch geregelt sein, insbesondere, um dasjenige Werkstück 4 oder 5, das nach dem Thermoformen die größere Wandstärke aufweist (dies muss nicht zwangsläufig das ursprüngliche stärkere Werkstück 5 sein, da der aus ihm geformte Gefrierfach-Innenbehälter eine im Verhältnis zur ursprünglichen Kantenlänge des Werkstücks 5 große Tiefe aufweist, ist seine Dehnung stärker als die des Werkstücks 4, und aufgrund der kleineren Abmessungen kann, um die erforderliche mechanische Festigkeit zu erzielen, beim Gefrierfach-Innenbehälter eine geringere Wandstärke genügen als beim größeren Normalkühlfach-Innenbehälter) als erstes mit seiner Patrize in Kontakt zu bringen, so dass beide Werkstücke 4,5 trotz unterschiedlicher Wandstärken im Wesentlichen gleichzeitig auf eine Temperatur abkühlen, bei der sie steif genug sind, um entformt werden zu können.

### BEZUGSZEICHEN

- 1: Entstapeleinrichtung
- 2: Stapel
- 3: Stapel
- 4: Werkstück
- 5: Werkstück
- 6: Flachmaterialhalter
- 7: Saugglocke
- 8: Transportkette
- 9: Klemmbalken
- 10: Aufwärmstation
- 11: Ziehstation
- 12: Spalt
- 13: Gehäuse
- 14: Gestell
- 15: Zylinder
- 16: Trennkörper
- 17: Zylinder
- 18: Sammelleitung
- 19: Leitung
- 20: Ausrichteinrichtung
- 21: Schieber
- 22: Schieber
- 23: Auflagefläche
- 24: Vorsprung
- 25: Klemmbacken
- 26: Klemmbacken
- 27: oberes Trum
- 28: unteres Trum
- 29: Innenraum
- 30: Decke
- 31: Boden
- 32: Heizelement
- 33: Spannungsquelle
- 34: Spannungsquelle
- 35: Schalter
- 36: Heizung
- 37: Heizung
- 38: Streckglocke
- 39: Stirnwand
- 40: Längswand
- 41: Sauganschluss
- 42: Halteprofil
- 43: Trennwand
- 44: Stufe
- 45: Nut
- 46: Dichtung
- 47: Kammer
- 48: Kammer
- 49: Spalt
- 50: Dichtfläche
- 51: Dichtfläche
- 52: Unterkante
- 53: Querbalken
- 54: Querbalken
- 55: Querbalken
- 56: Längsbalken
- 57: Rahmen
- 58: Werkzeug
- 59: Patrize
- 60: Patrize
- 61: Stufe
- 62: Stufe

## Patentansprüche

1. Thermoformanlage, insbesondere für die Fertigung von Kältegeräte-Innenbehältern aus Flachmaterial, mit einem zwei Patrizen (59, 60) umfassenden Werkzeug (58) und einer mit dem Werkzeug (58) zusammenwirkenden Streckglocke (38), deren dem Werkzeug (58) zugewandte offene Seite durch einen zwischen die Patrizen (59, 60) eingreifenden Querträger in zwei Öffnungen unterteilt ist, wobei jede Öffnung jeweils eine der Patrizen (59, 60) aufnimmt, wobei die Streckglocke (38) zwei Dichtflächen (50, 51) aufweist, die über den Querträger verlaufen, wobei die erste Dichtfläche (50) sich um die erste Öffnung und die zweite Dichtfläche (51) sich um die zweite Öffnung erstreckt, wobei ein Rahmen (57), der zum Klemmen von zu formenden Werkstücken (4, 5) mit der Streckglocke (38) zusammenwirkt, einen dem Querträger gegenüberliegenden Querbalken (54) aufweist,
**dadurch gekennzeichnet, dass**
die Breite eines Spalts zwischen der ersten Dichtfläche (50) und einer ihr gegenüberliegenden Oberfläche des Querbalkens (54) größer ist als die Breite eines Spalts zwischen der zweiten Dichtfläche (51) und einer ihr gegenüberliegenden Oberfläche des Querbalkens (54).

2. Thermoformanlage nach Anspruch 1, **dadurch gekennzeichnet, dass** der Querträger eine Trennwand (43) ist, die die Streckglocke (38) in zwei getrennt evakuierbare Kammern (47, 48) unterteilt.

3. Thermoformanlage nach einem der vorhergehenden Ansprüche, **dadurch gekennzeichnet, dass** die zwei Patrizen (59, 60) Saugöffnungen zum Ansaugen eines Werkstücks (4, 5) an die Patrizen (59. 60) aufweisen und dass die Patrizen (59, 60) getrennt voneinander absaugbar sind.

4. Thermoformanlage nach einem der vorhergehenden Ansprüche, **gekennzeichnet durch** eine Aufwärmstation (10), die eine erste Heizung (36) zum Erhitzen eines an der ersten Öffnung der Streckglocke (38) zu platzierendem Werkstücks (4) und eine zweite Heizung (37) zum Erhitzen eines an der zweiten Öffnung der Streckglocke (38) zu platzierendem Werkstücks (5) umfasst und dass die Leistungsdichte der ersten Heizung (36) größer als die der zweiten Heizung (37) ist.

5. Thermoformanlage nach einem der vorhergehenden Ansprüche, **gekennzeichnet durch** eine Flachmaterialentstapeleinrichtung (1) mit einer Mehrzahl von Flachmaterialhaltern (6), wobei eine erste Gruppe der Flachmaterialhalter (6) auf einer Seite einer Grenzlinie relativ zu einer zweiten Gruppe der Flachmaterialhalter (6) vertikal beweglich sind.

6. Thermoformanlage nach Anspruch 5, **dadurch gekennzeichnet, dass** die Flachmaterialentstapeleinrichtung (1) einen Trennkörper (16) umfasst, der entlang der Grenzlinie zwischen zwei an der ersten bzw. der zweiten Gruppe von Flachmaterialhaltern (6) gehaltene Flachmaterial-Werkstücke (4, 5) eingreift.

7. Thermoformanlage nach Anspruch 6, **dadurch gekennzeichnet, dass** die Entstapeleinrichtung (1) Schieber (21) umfasst, die quer zu der Grenzlinie beweglich sind, um ein Flachmaterial-Werkstück (4, 5) gegen den Trennkörper (16) zu drücken.

8. Thermoformanlage nach Anspruch 6 oder 7, **dadurch gekennzeichnet, dass** die Entstapeleinrichtung (1) Schieber (22) umfasst, die parallel zu der Grenzlinie beweglich sind.

9. Thermoformanlage nach Anspruch 6, 7 oder 8, **dadurch gekennzeichnet, dass** der Trennkörper (16) zwischen einer zwischen die Werkstücke (4, 5) eingreifenden aktiven Stellung und einer nicht eingreifenden passiven Stellung beweglich ist.

10. Verfahren zum Betreiben einer Thermoformanlage, insbesondere für die Fertigung von Kältegeräte-Innenbehältern aus Flachmaterial, mit einem zwei Patrizen (59, 60) umfassenden Werkzeug (58) und einer mit dem Werkzeug (58) zusammenwirkenden Streckglocke (38), deren dem Werkzeug (58) zugewandte offene Seite durch einen zwischen die Patrizen (59, 60) eingreifenden Querträger in zwei Öffnungen unterteilt ist, wobei jede Öffnung jeweils eine der Patrizen (59, 60) aufnimmt, wobei die Streckglocke (38) zwei Dichtflächen (50, 51) aufweist, die über den Querträger verlaufen, wobei die erste Dichtfläche (50) sich um die erste Öffnung und die zweite Dichtfläche (51) sich um die zweite Öffnung erstreckt, bei dem in Kontakt mit der ersten Dichtfläche (50) ein erstes Werkstück (4) und gleichzeitig in Kontakt mit der zweiten Dichtfläche (51) ein zweites Werkstück (5) geformt wird,
**dadurch gekennzeichnet, dass**
die zwei Werkstücke unterschiedliche Wandstärken haben.

## Claims

1. Thermoforming system for the production of refrigeration device inner containers made of flat material, with a tool (58) comprising two dies (59, 60) and, interacting with the tool (58), a stretching bell (38), the open side of which, facing the tool (58), is divided into two openings by a crosspiece engaging between the dies (59, 60), wherein each opening respectively receives one of the dies (59, 60), wherein
the stretching bell (38) has two sealing surfaces (50, 51), which run over the crosspiece, wherein the first sealing surface (50) extends over the first opening and the second sealing surface (51) extends over the second opening, wherein a frame (57) for clamping to workpieces (4, 5) to be formed interacts with the stretching bell (38), has a transverse beam transverse beam (54) opposite the crosspiece,
**characterised in that**
the width of a gap between the first sealing surface (50) and an opposite surface of the transverse beam (54) is greater than the width of a gap between the second sealing surface (51) and an opposite surface of the transverse beam (54).

2. Thermoforming system according to claim 1 **characterised in that** the crosspiece is a partition wall (43) which divides the stretching bell (38) into two separate evacuable chambers (47, 48).

3. Thermoforming system according to any one of the preceding claims **characterised in that** the two dies (59, 60) have suction openings for sucking a workpiece (4, 5) to the dies (59, 60) and that **in that** the dies (59, 60) are suckable separately from each other.

4. Thermoforming system according to any one of the preceding claims **characterised by** a heating station (10) which comprises a first heater (36) for heating a workpiece (4) to be placed on a first opening of the stretching bell (38) and a second heater (37) for heating a workpiece (5) to be placed on the second opening of the stretching bell (38) and that the power density of the first heater (36) is greater than that of the second heater (37).

5. Thermoforming system according to any one of the preceding claims **characterised by** flat material unstacking device (1) with a plurality of flat material holders (6), wherein a first group of flat material holders (6) is vertically movable on one side of a border line relative to a second group of flat material holders (6).

6. Thermoforming system according to claim 5 **characterised in that** the flat material unstacking device (1) comprises a separating element (16) which engages along the border line between two flat material workpieces (4, 5) held respectively on the first and second group of flat material holders (6).

7. Thermoforming system according to claim 6 **characterised in that** the unstacking device (1) comprises pushers (21) which are movable perpendicularly to the border line in order to press a flat material workpiece (4, 5) against the separating element (16).

8. Thermoforming system according to claim 6 or 7 **characterised in that** the unstacking device (1) comprises pushers (22) which are movable in parallel to the border line.

9. Thermoforming system according to claim 6, 7 or 8 **characterised in that** the separating element (16) is movable between an active position engaging in the workpieces and a non-engaging passive position.

10. Method of operating a thermoforming system, in particular for the production of refrigeration device inner containers made of flat material, with a tool (58) comprising two dies (59, 60) and, interacting with the tool (58), a stretching bell (38), the open side of which, facing the tool (58), is divided into two openings by a crosspiece engaging between the dies (59, 60), wherein each opening respectively receives one of the dies (59, 60), wherein the stretching bell (38) has two sealing surfaces (50, 51), which run over the crosspiece, wherein the first sealing surface (50) extends over the first opening and the second sealing surface (51) extends over the second opening, in which in contact with the first sealing surface (50) a first workpiece (4) and at the same time in contact with the second sealing surface (51) a second workpiece (5) is formed,
**characterised in that**
the two workpieces have different wall thicknesses.

## Revendications

1. Installation de thermoformage, en particulier pour la fabrication de réceptacles intérieurs d'appareils frigorifiques à partir de matériau plat, comportant un outil (58) comprenant deux clichés d'estampage (59, 60) et une cloche d'étirement (38) coopérant avec l'outil des ouvrantes (58) et dont la face ouverte tournée vers l'outil (58) est divisée par un support transversal s'engrenant entre les clichés d'estampage (59, 60) en deux ouvertures, chaque ouverture recevant respectivement un des clichés d'estampage (59, 60),
dans laquelle la cloche d'étirement (38) présente deux surfaces d'étanchéité (50, 51) qui passent au-dessus du support transversal, la première surface d'étanchéité (50) s'étendant autour de la première ouverture et la seconde surface d'étanchéité (51) autour de la seconde ouverture, un cadre (57), qui coopère pour serrer des pièces à mouler (4, 5) avec la cloche d'étirement (38), présentant une barre transversale (54) opposée au support transversal,
**caractérisée en ce que**
la largeur d'un intervalle entre la première surface d'étanchéité (50) et une surface qui lui est opposée de la barre transversale (54) est supérieure à la largeur d'un intervalle entre la seconde surface d'étanchéité (51) et une surface qui lui est opposée de la barre transversale (54).

2. Installation de thermoformage selon la revendication 1, **caractérisée en ce que** le support transversal est une cloison de séparation (43) qui divise la cloche d'étirement (38) en deux chambres pouvant être évacuées séparément (47, 48).

3. Installation de thermoformage selon une des revendications précédentes, **caractérisée en ce que** les deux clichés d'estampage (59, 60) présentent des ouvertures d'aspiration pour aspirer un outil (4, 5) vers les clichés d'estampage (59, 60) et que les clichés d'estampage (59, 60) peuvent être aspirés indépendamment l'un de l'autre.

4. Installation de thermoformage selon une des revendications précédentes, **caractérisée par** une station de chauffage (10) qui comprend un premier chauffage (36) pour chauffer une pièce (4) à positionner au niveau de la première ouverture de la cloche d'étirement (38) et une seconde ouverture (37) pour chauffer une pièce (5) à positionner au niveau de la seconde ouverture de la cloche d'étirement (38) et que la densité de puissance du premier chauffage (36) est supérieure à celle du second chauffage (37).

5. Installation de thermoformage selon une des revendications précédentes, **caractérisée par** un dispositif de désempilage de matériau plat (1) comportant une pluralité de supports de matériau plat (6), dans laquelle un premier groupe de supports de matériau plat (6) est mobile verticalement sur un côté d'une ligne de limitation par rapport à un second groupe de supports de matériau plat (6).

6. Installation de thermoformage selon la revendication 5, **caractérisée en ce que** le dispositif de désempilage de matériau plat (1) comprend un corps de séparation (16) qui s'engrène le long de la ligne de limitation entre deux pièces en matériau plat (4, 5) maintenues au niveau du premier ou du second groupe de supports de matériau plat (6).

7. Installation de thermoformage selon la revendication 6, **caractérisée en ce que** le dispositif de désempilage (1) comprend des tiroirs (21) qui sont mobiles transversalement à la ligne de limitation afin de comprimer une pièce en matériau plat (4, 5) contre le corps de séparation (16).

8. Installation de thermoformage selon la revendication 6 ou 7, **caractérisée en ce que** le dispositif de désempilage (1) comprend des tiroirs (22) qui sont mobiles parallèlement à la ligne de limitation.

9. Installation de thermoformage selon la revendication 6, 7 ou 8, **caractérisée en ce que** le corps de séparation (16) est mobile entre une position active d'engrènement entre les pièces (4, 5) et une position passive sans engrènement.

10. Procédé d'utilisation d'une installation de thermoformage, en particulier pour la fabrication de réceptacles intérieurs d'appareils frigorifiques à partir de matériau plat, comportant un outil (58) comprenant deux clichés d'estampage (59, 60) et une cloche d'étirement (38) coopérant avec l'outil (58) et dont la face ouverte tournée vers l'outil (58) est divisée par un support transversal s'engrenant entre les clichés d'estampage (59, 60) en deux ouvertures, chaque ouverture recevant respectivement un des clichés d'estampage (59, 60), la cloche d'étirement (38) présentant deux surfaces d'étanchéité (50, 51) qui s'étendent au-dessus du support transversal, la première surface étanchéité (50) s'étendant autour de la première ouverture et la seconde surface étanchéité (51) autour de la seconde ouverture,
dans lequel, en contact avec la première surface d'étanchéité (50), une première pièce (4) et, simultanément, en contact avec la seconde surface d'étanchéité (51), une seconde pièce (5) sont moulées,
**caractérisé en ce que** les deux pièces ont des épaisseurs de paroi différentes.
